(19) Europäisches Patentamt / European Patent Office / Office européen des brevets

(11) **EP 4 551 154 B1**

(12) **EUROPEAN PATENT SPECIFICATION**

(45) Date of publication and mention
of the grant of the patent:
**28.01.2026 Bulletin 2026/05**

(21) Application number: **23735749.6**

(22) Date of filing: **28.06.2023**

(51) International Patent Classification (IPC):
*A61C 17/22* (2006.01)   *A46B 13/00* (2006.01)

(52) Cooperative Patent Classification (CPC):
**A61C 17/22; A46B 9/025; A46B 9/028;
A46B 9/045; A46B 9/06; A46B 13/02;
A61C 17/222; A61C 17/228;** A46B 2200/1066

(86) International application number:
**PCT/EP2023/067563**

(87) International publication number:
**WO 2024/008524 (11.01.2024 Gazette 2024/02)**

(54) **CLEANING SECTION FOR AN ORAL CLEANING DEVICE**

REINIGUNGSABSCHNITT FÜR EINE MUNDREINIGUNGSVORRICHTUNG

SECTION DE NETTOYAGE D'UN DISPOSITIF DE NETTOYAGE ORAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.07.2022 EP 22182724**

(43) Date of publication of application:
**14.05.2025 Bulletin 2025/20**

(73) Proprietor: **Koninklijke Philips N.V.
5656 AG Eindhoven (NL)**

(72) Inventors:
• **GERHARDT, Lutz Christian
5656 AG Eindhoven (NL)**

• **BRANDÃO SILVA, Priscilla
5656 AG Eindhoven (NL)**
• **ADRIAENSEN, Guido Antonius Theodorus
5656 AG Eindhoven (NL)**
• **WILLIAMS, Kayleigh Karina
5656 AG Eindhoven (NL)**

(74) Representative: **Philips Intellectual Property &
Standards
High Tech Campus 52
5656 AG Eindhoven (NL)**

(56) References cited:
**EP-A1- 3 785 664      EP-A1- 3 785 664
EP-A2- 0 208 401      EP-A2- 0 208 401
US-A1- 2003 226 223   US-A1- 2003 226 223
US-A1- 2005 011 024   US-A1- 2005 011 024**

**Description**

FIELD OF THE INVENTION

The present invention relates to the field of oral cleaning devices.

BACKGROUND OF THE INVENTION

A document in the art is exemplified by EP 0 208 401 A2.

Within the area of personal oral cleaning, it remains a challenge to optimize the structure and configuration of oral cleaning devices so as to enable best cleaning performance for all types of teeth, and for all areas of each tooth.

Research conducted by the inventors of the present invention has found that, in any type of oral cleaning device, to achieve good overall interproximal and gum line cleaning, ideally more than one cleaning element layout is required in a single device. For instance, the optimal cleaning element length for interproximal cleaning is longer than the optimal cleaning element length for gum line cleaning, and optimal angle of extension of the cleaning elements may also be different. However, providing both these optimal cleaning element layouts in one oral cleaning arrangement has been found to give rise to new challenges and new avenues for further optimization.

SUMMARY OF THE INVENTION

For the purposes of the present application, a challenge identified by the inventors is that of providing a brushing section layout which includes more than one cleaning element layout in a configuration that can best ensure that every tooth will be mechanically engaged by all classes of brushing cleaning element and (ideally) all parts of every tooth can be so engaged. It has been realized by the inventors that this is a challenge because the teeth in the mouth have different sizes and thus, for a fixed pattern of oral cleaning elements, it is not obvious how to provide such a pattern which is arranged so that it can be best guaranteed that for any tooth engaged by the pattern of cleaning elements will, in the course of normal brushing operation (through manual strokes and/or automatically actuated strokes) come into contact with cleaning elements of all the plurality of types (e.g. different heights, lengths angular arrangements, diameters and so on).

The invention is defined by the claims.

According to an aspect of the invention, there is provided a system (or cleaning arrangement/system/apparatus/section), for use with an oral cleaning device.

The system comprises a cleaning section for an oral cleaning device, the cleaning section comprising a substrate; and an arrangement of cleaning elements carried by a surface of the substrate.

The arrangement of cleaning elements is formed of cleaning elements from a set of at least two different categories (A, B) of cleaning element, the cleaning elements of each category having a height, length and/or angular extension relative to the substrate surface different to every other category.

The arrangement of cleaning elements is composed of a plurality of arrangement units arrayed sequentially in a row along a longitudinal axis (X), each unit including a plurality of groups of cleaning elements, each group comprising a plurality of cleaning elements of only one of the categories (A, B), and each unit having at least one group of each of at least two different categories of cleaning element (and preferably at least one group of each category).

Preferably each cleaning element group defines an elongate footprint on the substrate having an elongate length dimension which is perpendicular to said first directional axis (X), and wherein the cleaning element groups within each unit are arrayed sequentially along said longitudinal axis (X).

Each cleaning arrangement unit has a unit total longitudinal width (w) along the longitudinal axis (X).

The system further comprises an actuation mechanism for driving periodic motion of the arrangement of cleaning elements back and forth along a travel path oriented parallel to said longitudinal axis, and the travel path having a first end and a second end, a distance therebetween defining a stroke length, $\Delta x$, along the longitudinal axis;

wherein the plurality of arrangement units and the stroke length are configured such that for every arrangement unit,

$$\Delta x \geq 0.5 \, \Delta W\_a$$

where $\Delta W\_a$ is a smallest longitudinal width section of a total longitudinal width of the respective unit that spans at least one group of each of at least two of the set of categories of cleaning element (and preferably at least one group of each category).

Thus, the proposed concept is to provide a pattern of cleaning elements (which upstand from a substrate, and are for engaging teeth in a brushing action during use for example) which consists of an ordered sequence of groups of cleaning elements aligned along an axis, the groups each being populated by one of a set of different types or classes of element which differ for example in their layout, form, orientation, shape, dimensions.

Thus, this provides a brushing field which contains elements suited for multiple different types of brushing or other mechanical action in relation to oral surfaces. Theoretically, one tuft category would be sufficient to clean a full tooth if the displacement of the column along the tooth arch (mesial-distal direction) is $\geq$ 1 tooth width. However, one column will not clean all critical areas, in particular both the gum line and interdental areas. Therefore, at least two different groups of specific tuft categories for gum-line and interdental cleaning are proposed.

To address the challenge discussed above concerning optimizing coverage of all teeth with all cleaning element categories, the inventors have proposed to configure the pattern unit widths co-operatively with the stroke length of a powered actuation system which drives the whole pattern cyclically or periodically back and forth along a path parallel with said widths. This co-operative optimization of these two parameters is done with the (ideal) aim that in a single actuation cycle, any tooth surface initially engaged with a part of the pattern will, over the course of that single cycle, be engaged by every one of the different categories of cleaning element.

The particular solution proposed by the inventors is to set the actuation stroke length at a fixed value which is such that, for every unit of the cleaning element arrangement/pattern, the condition holds that said stroke length is at least half of the minimum width (along the longitudinal axis) which spans one group of each category of cleaning element. This way (and as will become clearer through visual illustration), over the whole actuation cycle, for every unit of the arrangement, all of the cleaning element categories are brought into contact with a particular point of a surface initially engaged with the unit (provided that said unit is neighbored by at least one other unit adjacent to it in the direction opposite the actuation stroke direction).

Another way of saying the same thing is that, for every unit, the minimum width (along the longitudinal axis of that unit) which spans one group of each category of cleaning element should be less than or equal to double the actuation stroke length.

The details will become clearer with reference to drawings later.

It is noted that the actuation stroke length means the total distance travelled along the actuation travel path in a single direction over the actuation cycle.

In some embodiments, the set of categories contains exactly two categories, or exactly three categories, or exactly four categories.

In some embodiments, each cleaning arrangement unit has a respective total width along said longitudinal axis of at least 2.5mm and less than 15mm. This corresponds approximately to a width which is between half the width of a typical mandibular central incisor and the whole width of a maxillary first molar tooth.

In some embodiments, every arrangement unit has the same width along said longitudinal axis. In some embodiments, this width might be set at between 10-15 mm or between 11-13 mm, or approximately 12 mm. This corresponds approximately to the width of a typical largest molar tooth, which is typically the largest tooth width of a person. This width of the largest tooth is typically about 12 mm. Thus, if all cleaning arrangement units are to have the same width, it may be preferred to set this width as equal approximately to the width of the widest tooth, to guarantee that each unit will span at least the width of every tooth.

In some embodiments, the plurality of arrangement units includes units with different total widths (w) to one another.

By way of example, different widths may be achieved by providing a lesser number of groups of cleaning elements in the smaller width units, or by providing groups of a smaller width (i.e. group longitudinal widths may vary between different units of the arrangement), or by adjusting a size of any gaps or spaces included as part of the unit.

In some embodiments, the condition recited above may be replaced or refined by the alternative (narrower) condition that each of the plurality of arrangement units, and the stroke length ($\Delta$x) are configured such that:

$$\Delta x \geq 0.5 \; \Delta W\_b$$

where $\Delta W\_b$ is the total longitudinal width of the longitudinally widest unit of the arrangement. The parameter W_b has a single value for the whole arrangement. This contrasts with the parameter W_a recited above, which has a respective value for every unit of the arrangement. The parameter $\Delta W\_b$, as defined above, will always be equal to or wider than any instance of the parameter W_a outlined above. Thus, the condition for W_b represents a subset of the scope covered by the condition related to W_a. By providing the stroke length equal to at least half the width of the widest unit of the cleaning element arrangement, this ensures that in a single stroke cycle, a surface initially engaged by any of the units will come into contact with every one of the different categories (provided that said one of the units is neighbored by at least one other unit adjacent to it in the direction opposite the actuation stroke direction).

In some embodiments, the cleaning stroke length ($\Delta$x) is less than or equal to 15 mm and greater than or equal to 1 mm. In some embodiments, the cleaning stroke length ($\Delta$x) is between 2 mm and 12 mm.

This range covers different tooth widths from smallest to largest expected, with the aim that the stroke length should (ideally) also be at least half of the width of a tooth which is being brushed or cleaned.

In some embodiments, the cleaning stroke length ($\Delta$x) is between 2 mm and 6 mm. 2 mm represents approximately half the width of a typical mandibular central incisor and 6 mm represents approximately the whole width of a maxillary first molar tooth.

In some embodiments, every unit contains a same number of groups of cleaning elements. In other embodiments, the number of groups in different units can vary.

In some embodiments, the groups comprised by every unit follow a same ordered sequence of the cleaning element categories. In other embodiments, the particular sequence of categories provided by the units can vary.

In some embodiments, the groups of every unit are arrayed contiguously along said longitudinal axis (X).

In some embodiments, the total longitudinal width (w) of each unit is defined as equal to the exact width which spans the respective sequence of groups comprised by that unit (including potentially any spaces or gaps included in-between groups of the unit).

In some embodiments, at least a subset of the units include a cleaning element free space at one longitudinal end, before or after the sequence of groups, and wherein the total longitudinal width of each unit is the width spanning all of the groups plus any cleaning element free space at said longitudinal end. The space would be at the same end of every unit that has one, for consistency. Thus, the cleaning element total width could be defined as the distance which spans from the start of the first group in the unit to the start of the first group of the next unit in the arrangement (or if there is no next group, to the end of the last group in the unit). In some embodiments, every unit includes a cleaning element free space as previously defined.

In some embodiments, every unit consists of a contiguous sequence of cleaning element groups arrayed along said longitudinal axis (X) followed by said cleaning element free space at a same (longitudinal) end of the unit.

In some embodiments, the plurality of cleaning arrangement units include respective cleaning element free spaces of different respective longitudinal widths to one another.

In some embodiments, the system further comprises a functional component for performing an oral care function mounted at a location within at least one of the cleaning element free spaces. In some embodiments, the functional component is one of: a source of light, a source of a radio frequency field, electrochemical source, an ultrasonic source, one or more nozzles for emitting a fluid, or one or more electrodes.

In a preferred embodiment, the arrangement units are arrayed contiguously with one another along said longitudinal axis (X).

In some embodiments, every unit contains exactly two groups of cleaning elements, the first group of a first category (A), and the second group of a second category (B). In some embodiments, these are in a same order for every unit, whereby the arrangement defines an alternating pattern of cleaning element categories.

In some embodiments, every unit of the arrangement contains exactly four groups of cleaning elements, following an ordered sequence along the longitudinal axis in which: a first group contains cleaning elements of a first category (A); a second group contains cleaning elements of a second category (B); a third group contains cleaning elements of the second category (B); and a fourth group contains cleaning elements of the first category (A). Thus the sequence defined by the groups of the unit is: ABBA.

In some embodiments, the arrangement of cleaning elements comprises at least 3 units, optionally at least 7, optionally at least 15, optionally at least 28, optionally at least 56. This provides a relatively large area field within which any surface engaging with the field will over an actuation cycle be engaged by all cleaning elements. 28 units would cover one unit per tooth. 56 units would cover two units per tooth: for example for cleaning both front and back.

In some embodiments, the system is for use as part of a brushing mouthpiece device.

In some embodiments, the cleaning section comprises or is comprised by a mouthpiece portion for the mouthpiece device for at least partial receipt in the mouth during use, and wherein the substrate is comprised by the mouthpiece portion. The body of the mouthpiece portion may define an arcuate contour shaped for approximately following a contour of at least a portion of a subject's dental arch, and wherein said longitudinal axis of the arrangement extends co-directionally with said arcuate contour. In this way, the sequence of units of the cleaning element arrangement follow along the contour of the user's teeth.

In some embodiments, the mouthpiece portion defines a tooth-receiving channel, the channel having a shape following said arcuate contour, to permit receipt of a row of teeth into the channel and wherein the arrangement of cleaning elements extends into the channel for engagement with teeth surfaces during use.

In some embodiments, the plurality of cleaning arrangement units includes units with different total widths (w) to one another. Thus, this permits the unit widths to be tailored to different tooth widths around the dental arch. In a mouthpiece device, the positions of the different units relative to different particular teeth can be known with some certainty. Thus, the unit widths can be tailored to specific tooth types expected to be positioned facing each unit in the arrangement when the mouthpiece is received within the mouth for normal use.

In some embodiments for example, the plurality of arrangement units includes units of at least seven different total widths.

This is to correspond to the minimum seven different tooth types that are present in each quadrant of the mouth, namely: Incisor (Central); Incisor (Lateral); Canine (Eye tooth / Cuspid); Bicuspid/premolar (1st); Bicuspid/premolar (2nd);

Molar (1st Molar); Molar (2nd Molar).

In some embodiments, the plurality of cleaning arrangement units may include units of at least 8 different total widths. This also encompasses the wisdom tooth (3rd Molar), which may have been removed in some people.

In some embodiments, the plurality of cleaning arrangement units may include units of at least four different total widths. In particular, since incisors are generally smaller than molars, it would make sense to provide one unit to address both incisors at once (especially for example in cases where the motion stroke length is to be based on the widest molar sections). Thus, the minimum number of different unit widths might be four: incisors, canine, premolars and molars, but wherein a preferred arrangement includes at least seven different widths.

In some embodiments, the plurality of cleaning arrangement units may include units of at least fourteen different widths. This corresponds to the minimum seven different tooth types that are present in each quadrant, and covers both quadrants of a single row of teeth, where tooth widths might vary between the two quadrants.

As already discussed, each unit of the arrangement includes at least a group of cleaning elements of a first category and a group of cleaning elements of a second category.

In some embodiments, a length of the cleaning elements of the first category, in a direction along their extension from the substrate, is greater than a length of the cleaning elements of the second category, in a direction along their extension from the substrate. Said length of the cleaning elements of the first category may for example be between 6-12 mm. Said length of the cleaning elements of the second category may for example be between 4 and 8 mm. Preferably, there is a minimum difference in the length of the cleaning elements of the first category compared to the cleaning elements of the second category. Preferably, the minimum difference in length is at least 1 mm, more preferably at least 2-3 mm.

In some embodiments, the cleaning elements of the first category extend from the substrate at a first angle, and the cleaning elements of the second category extend from the substrate at a different second angle, wherein the second angle is shallower than the first angle. The second angle may for example be between 40° and 80°, more preferably approximately 45°. The first angle may for example be between 70° and 90°, more preferably approximately 90°.

In research, it has been found that this provides more optimal cleaning for interdental regions by the first group, and more optimal cleaning for the gumline by the second group.

Preferably, there is a minimum difference in the angle of extension of the cleaning elements of the first group compared to the angle of extension of the elements of the second group, for example at least 10°, more preferably at least 20°, more preferably at least 30°.

In another aspect of the invention an oral cleaning device can be provided which comprises a system in accordance with any embodiment described in this document, or in accordance with any claim of this application. The oral cleaning device may be a mouthpiece device in some examples. The oral cleaning device may be a powered toothbrush in some examples.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figs 1-4 schematically illustrate an example cleaning section in accordance with at least one set of embodiments of the invention;

Fig. 5 schematically illustrates a further example cleaning section in accordance with at least one set of embodiments of the invention;

Fig. 6 schematically illustrates a further example cleaning section in accordance with at least one set of embodiments of the invention;

Figs. 7-10 schematically illustrate a further example cleaning section in accordance with at least one set of embodiments of the invention;

Fig. 11 schematically illustrates a further example cleaning section in accordance with at least one set of embodiments of the invention;

Fig. 12 schematically illustrates a further example cleaning section in accordance with at least one set of embodiments of the invention;

Fig. 13 schematically illustrates a further example cleaning section in accordance with at least one set of embodiments of the invention;

Fig. 14 schematically illustrates actuation of the example cleaning section of Fig. 11;

Fig. 15 schematically illustrates actuation of the example cleaning section of Fig. 13; and

Fig. 16 shows an example oral cleaning device.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cleaning system or section which includes an arrangement of cleaning elements which consists of an ordered sequence of groups of cleaning elements aligned along an axis, the groups each being populated by one of a set of different types or classes of element which differ for example in their layout, form, orientation, shape, dimensions, or other spatial characteristics. Thus, this provides a brushing field which contains elements suited for multiple different types of brushing or other mechanical action in relation to oral surfaces. To optimize coverage of all teeth with all cleaning element categories, it is proposed to configure the pattern units co-operatively with the stroke length of a powered actuation system.

An outline of main features in accordance with embodiments of the invention will now be described in summary, before being described in more detail later.

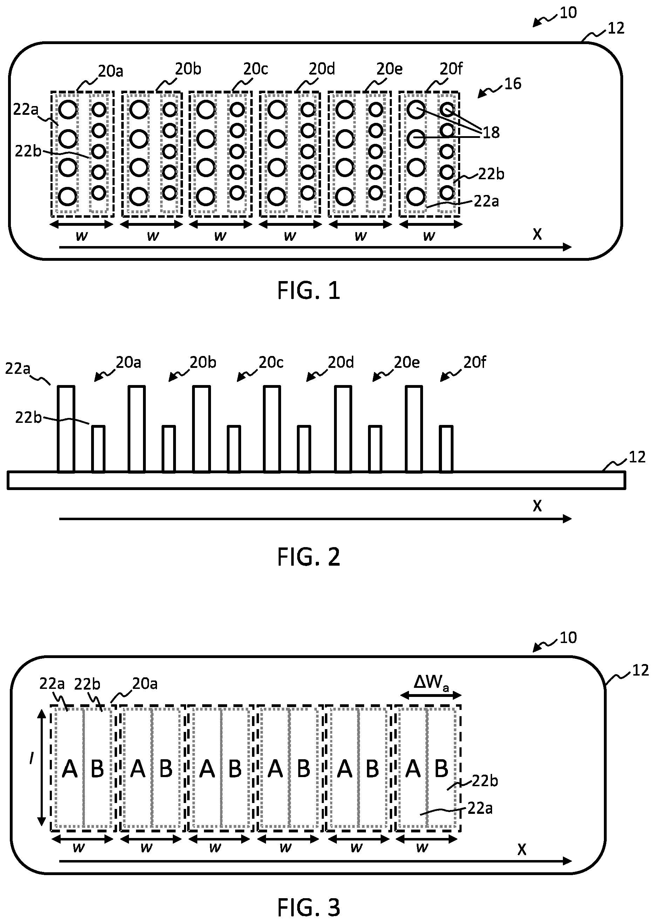

To aid illustration, this summary outline of main features of the invention will be presented with reference to Figs. 1-3, which show a configuration according to one particular set of embodiments. It will be appreciated that not all features of this specific implementation are essential to the general inventive concept, and reference to the Figures at this stage is made to aid understanding.

With reference first to Figs. 1-3, these schematically show at least a part of a cleaning section 10 for an oral cleaning device. Fig. 1 shows a highly schematic plan view of the arrangement of cleaning elements comprised by the cleaning section, illustrating the division of the arrangement into units and groups. Fig. 2 shows a schematic elevation view of the arrangement of cleaning elements. Fig. 3 shows another schematic plan view, this illustrating more clearly the sequencing of cleaning element categories followed by the cleaning element groups of this example arrangement.

The cleaning section includes a substrate 12 which carries on its surface an arrangement 16 of cleaning elements 18. The arrangement of cleaning elements may be an arrangement of tufts of cleaning elements. The substrate for example may be a portion of a cleaning unit for being received in the mouth of a subject for oral cleaning during operation. For example it could be part or all of a platen of a toothbrush, a multi-surface brush, a partial mouthpiece or a full mouthpiece. It could form a part of a mouthpiece portion of a brushing mouthpiece device. The cleaning elements upstand from the substrate surface. The cleaning elements may be bristles, or bristle-like elements. The cleaning elements may be flexible elastomeric rods in some examples. The cleaning elements may be bunched into cleaning element tufts.

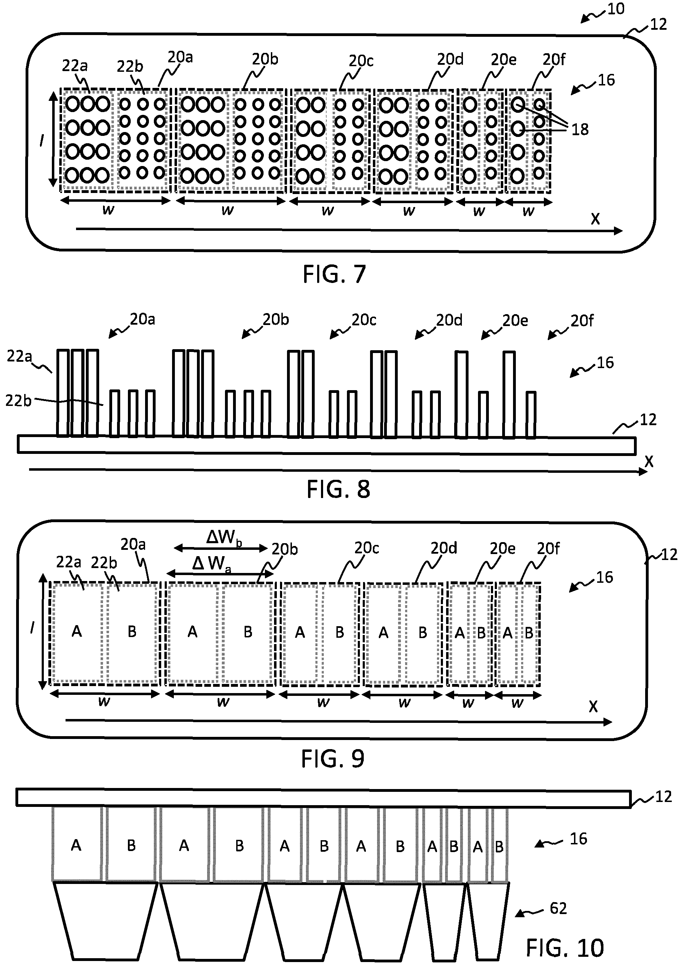

The arrangement 16 of cleaning elements 18 is formed of cleaning elements from a set of at least two different categories (labelled A and B in this illustrative example) of cleaning element, the cleaning elements of each category having a height, length and/or angular extension relative to the substrate surface different to every other category. For example, each category may define a different height, length and/or angular extension of tufts of cleaning elements relative to the surface. As will be explained further later, different heights or lengths of cleaning elements can be useful for cleaning gumline vs interdental regions. Different extension angles of cleaning elements can be useful for cleaning gumline vs interdental. **In** the schematic illustration of Fig. 8 for example, the cleaning elements of the two different categories A and B are shown as respectively having different heights or lengths.

The arrangement 16 of cleaning elements 18 is composed of a plurality of arrangement units 20, these being arrayed sequentially in a row along a longitudinal axis (X). Each unit 20 includes a respective plurality of groups 22 of cleaning elements, each group 22 containing a plurality of cleaning elements 18 of only one of the categories (A, B) and each unit 20 having at least one group 22 of each category of cleaning element. **In** the particular example illustrated in Figs. 1-3, each unit 20 contains exactly two groups 22a, 22b of cleaning elements 18, the first of a first category (A), the second of a second category (B). However, as will become clear from further examples, this is just one possible configuration.

Each cleaning element group 22 defines an elongate footprint on the substrate, by which is meant that it has an elongate length dimension ($l$) longer than a width dimension (w). As shown in Fig. 3, the elongate length dimension ($l$) is perpendicular to said longitudinal axis (X), and wherein the cleaning element groups 22 within each unit 20 are arrayed sequentially along said longitudinal axis (X).

Each cleaning arrangement unit 20 has a unit total longitudinal width (w) along the longitudinal axis (X).

In this illustrated example, all of the units 20 contain the same number of groups 22 of cleaning elements, and the groups 22 comprised by every unit 20 follow a same ordered sequence of the cleaning element categories. In this example, this sequence is AB. As a result, the overall cleaning element arrangement 16 defines a cyclically repeating pattern of cleaning element categories ABABAB etc., and where each unit 20 effectively is a smallest unit of this cyclically repeating pattern (i.e. AB in this case). This represents one advantageous configuration, but is not the only one, as will become clear. This type of configuration could be expanded to a cyclically repeating sequence of any number of categories, e.g. ABCABCABC, where ABC is the sequence of categories followed by each unit.

Although not fully clear from the schematic illustration, in accordance with the present example, the groups 22 comprised by every unit 20 are arrayed contiguously within that unit along said longitudinal axis (X). Also, in the illustrated example, the units 20 are arrayed contiguously with one another along said longitudinal axis (X).

In the illustrated example, the total longitudinal width (w) of each unit is equal to the exact width spanned by the respective sequence of groups 22 of the unit.

According to an aspect of the invention, there is provided a system for use with or inclusion within an oral cleaning device, and the system comprising the cleaning section and an actuation mechanism for driving periodic motion of the arrangement 16 of cleaning elements.

According to a further aspect of the invention, there is provided an oral cleaning device comprising such a system.

For example, the actuation mechanism could be arranged to drive motion of the substrate 12. In some examples, this may be motion of the substrate relative to another body. In other cases, it could be for example a global vibratory motion applied to the body of the substrate 12.

The actuation mechanism may be comprised as part of the cleaning section or may include at least a component which is separate to the cleaning section. For example, the actuation mechanism may include a motion generating component such as a motor which is spatially separated from the cleaning section, for example for inclusion in a main body portion or handle portion of an oral cleaning device, to which the cleaning section is attached or coupled.

With regards to the actuation mechanism, the skilled person will readily know of a multiplicity of different ways to implement this feature. In one common design, the actuation mechanism comprises a motor for converting electrical energy into kinetic energy. In some examples, the motor may be for inclusion in a main body portion or a handle portion of the oral cleaning device, and wherein the motor is connected to the cleaning section via a coupling means, e.g. a drive shaft. For example, the motor may be integrated in the handle portion or main body portion of a powered toothbrush or a brushing mouthpiece device, and wherein a motion coupling means, e.g. a drive shaft, couples the motion generated by the motor to a cleaning section of the device.

In other examples, the actuation mechanism may be comprised by, or located locally to, the cleaning section itself. For example, the cleaning section may include first and second parts, wherein the first part carries the cleaning elements and is moveable relative to the second part, and wherein the second part incorporates the actuation mechanism and is operable to drive motion of the first part relative to the second part.

By way of non-limiting example, the cleaning section may be or may form part of a brush head for a powered toothbrush for example, or a mouthpiece portion of a powered mouthpiece device in other examples. These represent just two examples and it will be appreciated that the inventive concept is not dependent upon use with any particular type of oral cleaning device.

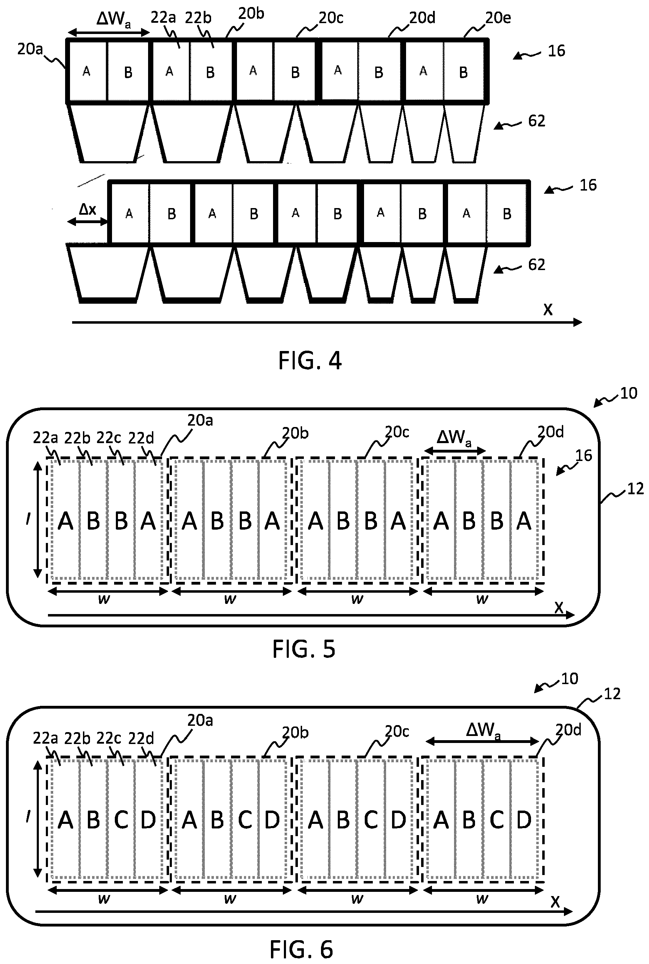

The actuation mechanism is not explicitly shown in the Figures. However, Fig. 4 illustrates an example of cyclical/periodic motion induced by an actuation mechanism along a linear travel path. The actuation is illustrated relative to a schematic illustration of a row of different teeth 62 into mechanical engagement with which the arrangement 16 of cleaning elements has been brought.

The actuation mechanism acts to move the arrangement of cleaning elements 16 back and forth along a travel path oriented parallel to said longitudinal axis X, and the travel path having a first end and a second end, a distance therebetween defining a stroke length, $\Delta x$, along the longitudinal axis. Fig. 4 (top) shows the arrangement positioned at the first end of the travel path, and Fig. 4 (bottom) shows the arrangement positioned at the second end of the travel path. Following this, the arrangement of cleaning elements is returned back to the first position.

In one preferred set of embodiments, the plurality of units 20 of the arrangement 16 of cleaning elements and the stroke length $\Delta x$ of the actuation are configured such that for every unit 20 in the arrangement, the following condition holds:

$$\Delta x \geq 0.5 \ \Delta W\_a$$

where $\Delta W\_a$ is a smallest longitudinal width section of a total longitudinal width of the respective unit 20 that spans at least one group of each of the set of categories of cleaning element.

The parameter $\Delta W\_a$ is thus one which is possessed separately by every unit 20 of the arrangement 16 and the condition should hold for every unit.

In the illustrated example of Figs. 1-4, the parameter $\Delta W\_a$ is the same for every unit 20 of the arrangement 20 because all of the units of the arrangement are identical. In the case of Figs. 1-4, parameter $\Delta W\_a$ is shown illustratively for one unit (although it is the same for all the others also) in Fig. 3 and Fig. 4. In this example, it corresponds in fact to the total longitudinal width (w) of the unit 20, since the unit only has one of each of the categories of the set of categories.

It is noted that a minimum arrangement of cleaning elements encompassed by embodiments of the invention may be an arrangement comprising: two units 20, each with (at least) two groups 20 of cleaning elements, one group of a first category (A), one group of a second category (B).

More preferably however, the arrangement of cleaning elements comprises at least 3 units, optionally at least 7, optionally at least 15, optionally at least 28, optionally at least 56. Provision of 28 units would cover one unit per tooth. 56 units would cover two units per tooth: for example for cleaning both front and back.

Fig. 5 illustrates a further example arrangement of cleaning elements in accordance with at least one set of embodiments.

In this arrangement, every unit 20 contains exactly four groups 22a, 22b, 22c, 22d of cleaning elements. The groups 22 are again arrayed contiguously within each unit 20 along the longitudinal axis X. The units 20 are also arrayed contiguously with one another along the longitudinal axis. The groups in each unit 20 follow an ordered sequence along the longitudinal axis in which: a first group contains cleaning elements of a first category (A); a second group contains cleaning elements of a second category (B); a third group contains cleaning elements of the second category (B); a fourth group contains cleaning elements of the first category (A). Thus, in this case, the overall arrangement 16 defines a cyclically repeating sequence of a total set of two cleaning element categories, and each unit 20 represents a smallest unit of that repeating sequence, namely ABBA. Thus, in this example, the set of possible categories of cleaning elements numbers only two (A and B), but there are four groups in each unit, with two groups of each category of cleaning element.

As already discussed, optionally, embodiments can include an actuation arrangement. As has also been discussed, a condition can be imposed ($\Delta x \geq 0.5\ \Delta W\_a$) which holds for every unit of the arrangement. By way of reminder, $\Delta W\_a$ is a smallest longitudinal width section of a total longitudinal width of a respective unit 20 of the arrangement 16 that spans at least one group 22 of each of the set of categories of cleaning element. In the example of Fig. 5, $\Delta W\_a$ spans just half the total longitudinal width, w, of each unit (as illustrated in Fig. 5), since this is the smallest portion of the width of each unit which fully spans both an A-category group 20 and a B-category group.

However, the arrangement 16 of Fig. 5 can be provided without any actuation, and without said constraint relating to the actuation stroke length $\Delta x$.

Fig. 6 illustrates a further example arrangement of cleaning elements in accordance with at least one set of embodiments.

In this arrangement, every unit 20 contains exactly four groups 22a, 22b, 22c, 22d of cleaning elements. The groups 22 are again arrayed contiguously within each unit 20 along the longitudinal axis X. The units 20 are also arrayed contiguously with one another along the longitudinal axis. The groups in each unit 20 follow an ordered sequence along the longitudinal axis in which: a first group contains cleaning elements of a first category (A); a second group contains cleaning elements of a second category (B); a third group contains cleaning elements of a third category (C); and a fourth group contains cleaning elements of a fourth category (D). Thus, in this case, the overall arrangement 16 defines a cyclically repeating sequence of a total set of four cleaning element categories, and each unit 20 represents a smallest unit of that repeating sequence, namely A, B, C, D. Thus, in this example, the set of possible categories of cleaning elements numbers four (A, B, C, D), there are four groups in each unit, with one groups of each category of cleaning element.

As already discussed, optionally, embodiments can include an actuation arrangement. As has also been discussed, a condition can be imposed ($\Delta x \geq 0.5\ \Delta W\_a$) which holds for every unit of the arrangement. For the example of Fig. 6, the parameter $\Delta W\_a$ is indicated. In this case, for each unit, it in fact spans the whole of the total longitudinal width w of the unit since this is the smallest portion of the total width of the unit that covers one group of every cleaning element category.

In each arrangement of the examples outlined so far, every unit 20 of a given arrangement has the same total longitudinal width, w. Furthermore, also in the examples outlined so far above, within each unit 20, the groups 22 of cleaning elements have the same longitudinal widths as one another. However, in relation to any of the above examples, variations of these might be provided in which, within a given arrangement, units of different widths are provided, and/or within units of a given arrangement or across different groups of a single arrangement, groups of different widths may be provided.

Figs. 7-10 schematically illustrate one example arrangement in accordance with one or more embodiments.

Here, Fig. 7 shows a highly schematic plan view of the arrangement of cleaning elements comprised by the cleaning section, illustrating the division of the arrangement into units and groups. Fig. 8 shows a schematic elevation view of the arrangement of cleaning elements. Fig. 9 shows another schematic plan view, this illustrating more clearly the sequencing of cleaning element categories followed by the cleaning element groups of this example arrangement. Fig. 10 schematically illustrates the arrangement of cleaning elements in use, being applied against a row of teeth.

In all respects, this set of embodiments is the same as the one outlined in Figs. 1-4, except for the fact that the plurality of arrangement units 20 includes units with different total widths (w) to one another.

In more detail, in this example, all of the units 20 contain the same number of groups 22 of cleaning elements, and the groups 22 comprised by every unit 20 follow a same ordered sequence of the cleaning element categories. In this example, this sequence is AB. As a result, the overall cleaning element arrangement 16 defines a cyclically repeating pattern of cleaning element categories ABABAB etc., and where each unit 20 effectively is a smallest unit of this cyclically repeating pattern (i.e. AB in this case).

Although not fully clear from the schematic illustration, in accordance with the present example, the groups 22 comprised by every unit 20 are arrayed contiguously within that unit along said longitudinal axis (X). Also, in the illustrated example, the units 20 are arrayed contiguously with one another along said longitudinal axis (X).

In the illustrated example, the total longitudinal width (w) of each unit is equal to the exact width spanned by the respective sequence of groups 22 of the unit.

However, in contrast to the set of embodiments of Figs. 1-4, among the units 20a-20f of the arrangement, there are units of different total widths w. In the present example, the different unit widths w is achieved by varying the widths along the longitudinal axis X of the groups 22 within the units. For example, the units 20c and 20d each contain one A-category group 22a and one B-category group 22b, but these groups having smaller longitudinal width than the equivalent A-category group and B-category groups in each of units 20a and 20b, and, in turn, larger widths than the equivalent A-category group and B-category groups in each of units 20e and 20f.

As schematically illustrated in Fig. 10, an advantage of optionally providing cleaning arrangement units 20 having differing widths is that these can better match the differing widths of teeth 62. For example, the widths can be configured in a sequential pattern of different widths that is known to correspond to the sequence of widths of typical teeth in a subject's mouth. This has the advantage that in use every tooth can be fully spanned by a respective unit 20 containing at least one group 22 of every category of cleaning element.

For example, if the cleaning section 10 is used as part of an oral care device which provides a reliably predictable positioning of cleaning arrangement units 20 relative to teeth, such as a brushing mouthpiece device (described later), then the unit widths w can be tailored to expected widths of particular teeth along the dental arch.

Thus, by providing the units with different widths, this allows units to match to the differing widths of teeth. As will become clear, there are different particular implementations of this, depending upon the intended use case. For example, for a brushing mouthpiece device, the positions of each unit relative to different particular teeth can be known to a high level of certainty for normal use, and thus the widths can be varied along the pattern longitudinal axis X to match onto the different typical tooth sizes. However, in other use cases, such as a power toothbrush, the provision of different widths still adds a technical effect since for example the user themselves can control the operation of brushing to match the appropriate group sizes to the tooth they are brushing, or, even absent this, the provision of different group sizes increases the probability that a given tooth of unknown size will be engaged by all categories of elements compared to a fixed unit width variant.

As noted above, embodiments can include an actuation arrangement. As has also been discussed, a condition can be imposed on the actuation stroke length $\Delta x$ ($\Delta x \geq 0.5 \, \Delta W\_a$) which holds for every unit of the arrangement. For the example of Figs. 7-10, the parameter $\Delta W\_a$ is indicated. In this case, for each unit, it in fact spans the whole of the total longitudinal width w of the unit since this is the smallest portion of the total width of the unit that covers one group of every cleaning element category.

Since there are units of different widths in this set of embodiments, the constraint corresponds in practice to a requirement that the stroke length $\Delta x$ should meet the constraint $\Delta x \geq 0.5 \, \Delta W\_a$ for the parameter $W\_a$ of the largest longitudinal width (w) unit of all the units 20 (unit 20a or unit 20b).

In some embodiments, the constraint on the actuation stroke length might be simplified. In particular, in some embodiments, instead of the previously discussed constraint, each of the plurality of arrangement units 20, and the stroke length $\Delta x$ may be configured such that,

$$\Delta x \geq 0.5 \, \Delta W\_b$$

where $\Delta W\_b$ is the total longitudinal width (w) of the longitudinally widest unit of the arrangement.

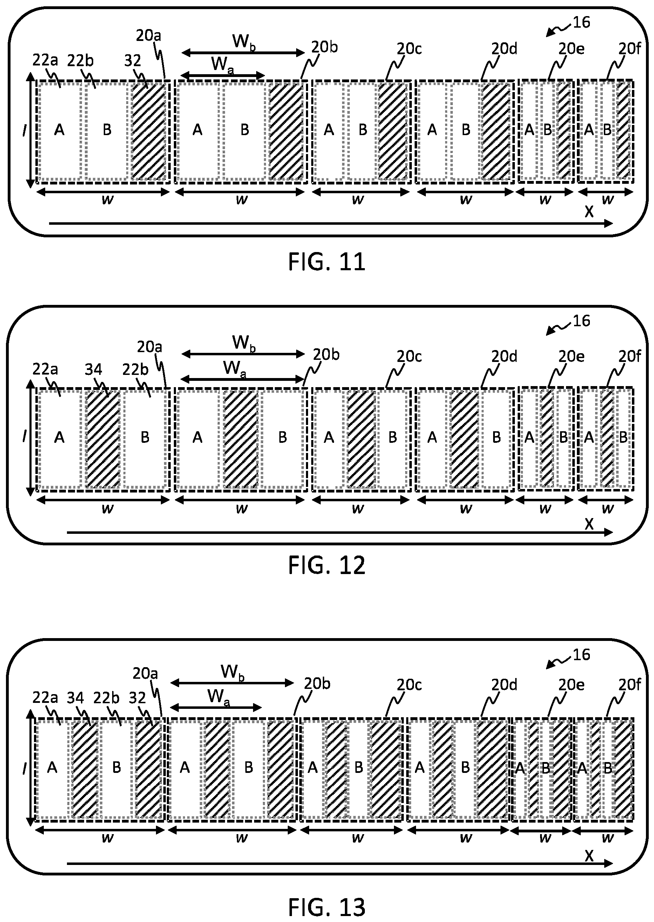

In the particular example of Figs 7-10, in fact $\Delta W\_a$ is the same as $\Delta W\_b$. However, this is not always the case. For example, for the cleaning arrangement of Fig. 5, $\Delta W\_b$ would be the total width of the largest of the units, whereas $\Delta W\_a$ is corresponds to only half the width of any one of the units. Another example arises in Fig. 11 and Fig. 13, to be described now.

With reference to Fig. 11, this shows a schematic plan view illustration of the cleaning element arrangement 16. In this example, each unit 20 of the arrangement 16 includes a cleaning element free space 32 at one longitudinal end (at one terminal end), before or after the sequence of groups. In fact, in the example of Fig. 11, every unit has the cleaning element free space at the distal end, after the sequence of groups 22 of the unit.

In this case, the total longitudinal width, w, of each unit 20 is the width spanning all of the groups 22 of the unit plus the cleaning element free space 32 at the end. The units 20 are arrayed contiguously with one another along the longitudinal axis. Thus, a corollary is that the total longitudinal width w can be defined for each unit 20 as the width along the longitudinal axis spanning from the start of the first group 22a of the unit, to the longitudinal end of the cleaning element free space at the end of the unit.

Thus, in this case, the cleaning element free space could be understood as part of a cyclically repeating pattern, A-B-SPACE-A-B-SPACE, where the arrangement units 20 represent the smallest unit of the cyclically repeating sequence (A-B-SPACE).

In the particular example of Fig. 11 (and indeed of that of Fig. 12 and Fig. 13), the arrangement includes units 20 of differing widths w along the longitudinal axis X. Furthermore, these different widths are achieved by providing the units with respective groups 22 of cleaning elements which have different widths along axis X compared to other groups. Likewise, the plurality of cleaning arrangement units 20 includes cleaning element free spaces 32 of different respective widths along the longitudinal axis X. However, it is not essential to provide units of different widths. Units 20 can be provided all of the same width w, and still comprising the cleaning element free spaces 32.

Furthermore, in the example of Fig. 11, every unit consists of a contiguous sequence of cleaning element groups 22 arrayed along said longitudinal axis (X) followed by said cleaning element free space 32. However, this too is not essential, and in some embodiments, each unit may include at least one cleaning element free space 34 in-between two groups 22 of the unit 20 (so that these two groups would not be contiguous). This thus forms an interstitial space between two groups.

An example of such an arrangement is illustrated in Fig. 12. This shows an arrangement of cleaning elements in which each unit 20 of the arrangement comprises two groups 22a, 22b of cleaning elements, one of each of a set of two categories of cleaning element (A and B), and wherein there is further included a cleaning element free space 34 separating (i.e. in-between) the two groups. Thus, each unit defines a sequential pattern A-SPACE-B. Fig. 12 represents just one example, and as a general principle, some or all of the units of the arrangement of any embodiment may include one or more cleaning element free spaces located in-between two groups of cleaning elements along the sequence extending along the longitudinal axis, so that it thereby spaces the two groups with respect to one another along the longitudinal axis. Likewise, although in Fig. 12 the different units have different widths, w, in other variations, the units may have the same widths as one another.

Fig. 13 shows a further example. In this example, each of the units 20 of the cleaning arrangement 16 include a cleaning element free space 32 at one longitudinal end, after the sequence of groups, and further including a cleaning element free space 34 in-between two of the groups of the unit. Thus, this is effectively a combination of the embodiments of Fig. 11 and Fig. 12 and the options described in relation to these can optionally be applied also to the embodiment of Fig. 13. In the illustrated example, each unit contains exactly two groups of cleaning elements, each containing cleaning elements of one of a set of two categories: A and B. Thus, each unit defines a sequence A-SPACE-B-SPACE. The units are contiguous with one another in this example along the longitudinal axis X. In this particular example, the arrangement 16 includes units of different widths w. However, this is not essential and all of the units could have the same width in other examples.

With regards to the cleaning element free spaces 32, 34, in some embodiments, the cleaning section 10 may further comprise a functional component for performing an oral care function mounted at a location within at least one of the cleaning element free spaces 32, 34, and optionally wherein the functional component is one of: a source of light, a source of a radio frequency field, an electrochemical source, an ultrasound source, one or more nozzles for emitting a fluid, or one or more electrodes. This provides a structurally convenient position in which to place the functional component.

As noted above, in some embodiments, there can be provided an actuation mechanism. As has also been discussed, a condition can be imposed on the actuation stroke length $\Delta x$ ($\Delta x \geq 0.5 \, \Delta W\_a$) which holds for every unit of the arrangement. As also discussed above, additionally or alternatively, a condition can be imposed on the actuation stroke length: $\Delta x \geq 0.5 \, \Delta W\_b$, where $\Delta W\_b$ is the total longitudinal width (w) of the longitudinally widest unit of the arrangement.

For the example of Figs. 11-13, the parameter $\Delta W\_a$ is indicated, and the parameter $\Delta W\_b$ is indicated. It can be seen that in the example of Fig. 12, $\Delta W\_b$ is the same as $\Delta W\_a$, but in the examples of Fig. 11 and Fig. 13, it is different.

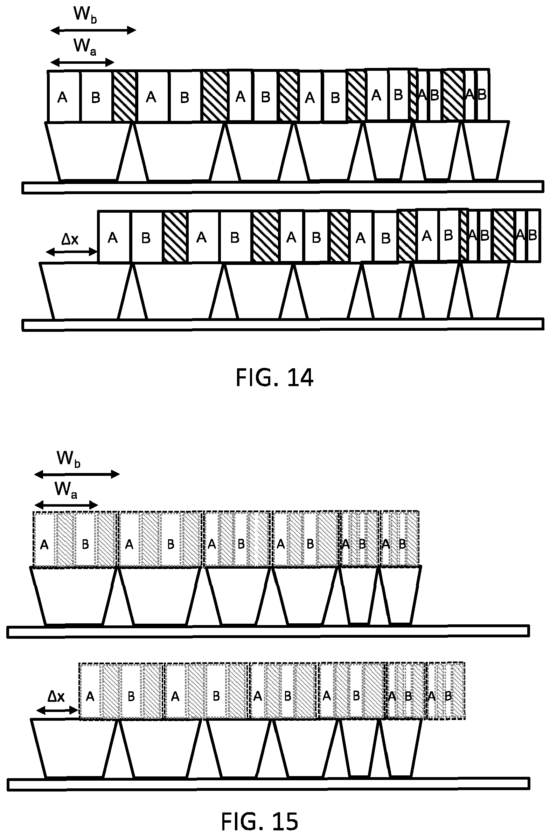

With regards to the actuation, Fig. 14 schematically illustrates the actuation action of the embodiment of Fig. 11, and Fig. 15 schematically illustrates the actuation action of the embodiment of Fig. 13. The parameters $\Delta W\_a$ and $\Delta W\_b$ are indicated. It can be seen that the cleaning element free spaces can assist in matching the single common actuation stroke length $\Delta x$ to the different tooth widths. Rather than expanding the width of the groups 22 in each unit to make the unit width wider, the spaces allow for keeping the unit widths relatively narrow. As noted, the spaces can be used to accommodate functional elements in some examples.

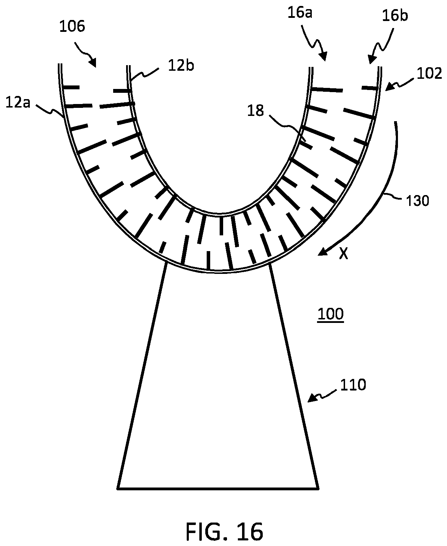

The cleaning section 10 according to any embodiment can be for use as part of a brushing mouthpiece device. By way of illustration, Fig. 16 shows an example oral care device in the form of a brushing mouthpiece device 100. The device comprises a mouthpiece portion 102 for at least partial receipt in the mouth during use. A body of the mouthpiece portion defines an arcuate contour 130 shaped for approximately following a contour of at least a portion of a user's dental arch. The mouthpiece portion defines a tooth-receiving channel 106, the channel having a shape following said arcuate contour 130, to permit receipt of a row of teeth into the channel.

In the context of such a such a device, the cleaning section could form the mouthpiece portion 102 of the device, and wherein the longitudinal axis X of the cleaning element arrangement 16 extends co-directionally with said arcuate contour 130.

For example, the arrangement of cleaning elements 16 may extend into the channel 106 for engagement with teeth surfaces during use. For example the channel may be bounded on either side by a respective substrate 12a, 12b, and wherein each of these carries a respective arrangement 16a, 16b of cleaning elements in accordance with any of the embodiments described in this document, or in accordance with any claim of the application. The mouthpiece device may further comprise a handle portion 110.

**In** some embodiments, the device 100 may further include an actuation mechanism for driving periodic motion of the arrangement of cleaning elements back and forth along a travel path oriented substantially parallel to the longitudinal axis X, or substantially perpendicular to the longitudinal axis X.

In the case where the actuated motion is parallel with the longitudinal axis X, the constraints mentioned above relating to $W_a$ and/or $W_b$ become relevant options to apply if desired.

The handle portion may include a drive unit of the actuation mechanism (e.g. a motor) for driving the motion of the cleaning elements. Alternatively, the actuation mechanism may be integrated in the mouthpiece portion of the device.

It is noted that the tufting of cleaning elements within cleaning mouthpieces is in general a challenge in terms of manufacturability. There may therefore be a preference to use fewer different tuft categories, arranged in a very efficient manner to obtain optimum coverage and maximize cleaning. Arrangements in accordance with those described in this document can assist in this aim. Moreover, efficient arrangement of cleaning elements may enable a smaller total area to be used for the tuft field, and this advantageously can generate additional free space that can be utilized to integrate additional functionality such as lighting elements, ultrasound elements, radiofrequency elements or one or more sensors.

As noted above, in some embodiments, the plurality of cleaning arrangement units includes units with different total widths (w) to one another. Thus, this permits the unit widths to be tailored to different tooth widths around the dental arch. In a mouthpiece device, the positions of the different units relative to different particular teeth can be known with some certainty. Thus, the unit widths can be tailored to specific tooth types expected to be positioned facing each unit in the arrangement when the mouthpiece is received within the mouth for normal use.

In some embodiments for example, the plurality of arrangement units includes units of at least seven different total widths. This is to correspond to the minimum seven different tooth types that are present in each quadrant of the mouth, namely: Incisor (Central); Incisor (Lateral); Canine (Eye tooth / Cuspid); Bicuspid (1st); Bicuspid (2nd); Molar (1st Molar); Molar (2nd Molar).

In some embodiments, the plurality of cleaning arrangement units may include units of at least 8 different total widths. This also encompasses the wisdom tooth (3rd Molar), which may have been removed in some people.

In some embodiments, the plurality of cleaning arrangement units may include units of at least four different total widths. In particular, since incisors are generally smaller than molars, it would make sense to provide one unit to address both incisors at once (especially for example in cases where the motion stroke length is to be based on the widest molar sections). Thus, the minimum number of different unit widths might be four: incisors, canine, premolars and molars, but wherein a preferred arrangement includes at least seven different widths.

In some embodiments, the plurality of cleaning arrangement units may include units of at least fourteen different widths. This corresponds to the minimum seven different tooth types that are present in each quadrant, and covers both quadrants of a single row of teeth, where tooth widths might vary between the two quadrants.

As has been discussed throughout, the arrangement of cleaning elements includes cleaning elements of a set of at least two different categories of cleaning element, , the cleaning elements of each category having a height, length and/or angular extension relative to the substrate surface different to every other category.

At minimum the set of categories includes at least two categories (first category and second category), and each unit of the arrangement includes a group of cleaning elements of the first category and a group of cleaning elements of the second category.

In some embodiments, a length of the cleaning elements of the first category, in a direction along their extension from the substrate, is greater than a length of the cleaning elements of the second category, along a direction of their extension from the substrate.

Said length of the cleaning elements of the first category may for example be between 6-12 mm. Said length of the cleaning elements of the second category may for example be between 4 and 8 mm. Preferably, there is a minimum difference in the length of the cleaning elements of the first category compared to the cleaning elements of the second category. Preferably, the minimum difference in length is at least 1 mm, more preferably at least 2-3 mm.

In some embodiments, the cleaning elements of the first category extend from the substrate at a first angle, and the cleaning elements of the second category extend from the substrate at a different second angle, wherein the second angle is shallower than the first angle. The second angle may for example be between 40° and 80°, more preferably approximately 45°. The first angle may for example be between 70° and 90°, more preferably approximately 90°.

Preferably, there is a minimum difference in the angle of extension of the cleaning elements of the first category compared to the angle of extension of the elements of the second category, for example at least 10°, more preferably at least 20°, more preferably at least 30°.

In research, it has been found that this provides more optimal cleaning for interdental regions by the first group, and more optimal cleaning for the gumline by the second group.

By way of example, Table 1 below outlines, by way of non-limiting example, a set of four example cleaning element categories (in this case the cleaning element being a tuft e.g. made from Nylon filaments/bristles, e.g. having a circular cross-section):

Table 1

| Category | Use | Cleaning element length (mm) | Tuft roll angle (deg) | Tuft area (mm$^2$) | Number of tufts |
|---|---|---|---|---|---|
| A | Interdental | 10 | 90 | 0.5 | 6 |
| B | Interdental | 10 | 90 | 3 | 3 |
| C | Gum-line | 4 | 45 | 0.5 | 6 |
| D | Gum-line | 10 | 45 | 3 | 3 |

It is noted that although particular embodiments outlined above relate to an oral cleaning device in the form of a brushing mouthpiece device, the inventive concept is applicable with any of a range of different oral care devices. Alternative examples include a powered toothbrush device for instance.

The cleaning section and the actuation mechanism together form a system which forms an aspect of the invention. The system can be for integration in an oral cleaning device. The oral cleaning device comprising the system forms a further aspect of the invention.

In the case that the oral cleaning device is a powered toothbrush, the cleaning section may form a part or the whole of a brush head of the toothbrush or a platen of the brush head. **In** the case that the oral cleaning device is a mouthpiece device, the cleaning section may form a part or the whole of a mouthpiece portion of the mouthpiece.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

**Claims**

1.  A system, comprising:

    a cleaning section (10) for an oral cleaning device, comprising a substrate (12), and an arrangement (16) of cleaning elements (18) carried by a surface of the substrate;
    wherein the arrangement is formed of cleaning elements from a set of at least two different categories (A, B) of cleaning element, the cleaning elements of each category having a height, length and/or angular extension relative to the substrate surface different to every other category;
    wherein the arrangement (16) of cleaning elements (18) is composed of a plurality of arrangement units (20) arrayed sequentially in a row along a longitudinal axis (X), each unit (20) including a plurality of groups (22) of cleaning elements, each cleaning element group (22) comprising a plurality of cleaning elements (18) of only one of the categories (A, B), and each unit (20) having at least one group of each category of cleaning element,
    wherein each cleaning element group (22) defines an elongate footprint on the substrate having an elongate length dimension which is perpendicular to said longitudinal axis (X), and wherein the cleaning element groups within each unit are arrayed sequentially along said longitudinal axis (X);
    wherein each cleaning arrangement unit (20) has a total longitudinal width (w) along the longitudinal axis (X), wherein the system further comprises an actuation mechanism for driving periodic motion of the arrangement of cleaning elements back and forth along a travel path oriented parallel to said longitudinal axis, and the travel path having a first end and a second end, a distance therebetween defining a stroke length, $\Delta x$, along the longitudinal axis;
    wherein the plurality of arrangement units and the stroke length are configured such that for every arrangement unit,

$$\Delta x \geq 0.5 \, \Delta W\_a$$

where $\Delta W\_a$ is a smallest longitudinal width section of a total longitudinal width (w) of the respective unit that spans at least one group of each of the set of categories of cleaning element.

2. The system of claim 1, wherein the plurality of arrangement units (20) includes arrangement units with different total widths (w) to one another.

3. The system of claim 1 or 2, wherein each of the plurality of arrangement units (20), and the stroke length ($\Delta x$) are configured such that,

$$\Delta x \geq 0.5\ \Delta W\_b$$

where $\Delta W\_b$ is the total longitudinal width of the longitudinally widest unit of the arrangement.

4. The system of any of claims 1-3, wherein the cleaning stroke length ($\Delta x$) is less than or equal to 15 mm and greater than or equal to 1 mm.

5. The system of any of claims 1-4, wherein every arrangement unit (20) contains a same number of groups (22) of cleaning elements, and
optionally wherein the groups of cleaning elements (22) comprised by every arrangement unit (20) follow a same ordered sequence of the cleaning element categories.

6. The system of any of claims 1-5, wherein the total longitudinal width (w) of each arrangement unit (20) is equal to the exact width spanned by the respective sequence of groups of the unit.

7. The system of any of claims 1-5, wherein at least a subset of the plurality of arrangement units (20) include a cleaning element free space (32) at one longitudinal end, before or after the sequence of groups, and wherein the total longitudinal width of each unit (20) is the width spanning all of the groups (22) plus the cleaning element free space (32), and optionally wherein every arrangement unit includes said cleaning element free space (32).

8. The system of claim 7, wherein every arrangement unit (20) consists of a contiguous sequence of cleaning element groups (22) arrayed along said longitudinal axis (X) followed by said cleaning element free space (32), and optionally wherein the plurality of cleaning arrangement units (20) includes cleaning element free spaces of different respective longitudinal widths (w).

9. The system of any of claims 7-8, further comprising a functional component for performing an oral care function mounted at a location within at least one of the cleaning element free spaces, and optionally wherein the functional component is one of: a source of light, a source of a radio frequency field, electrochemical source, an ultrasonic source, one or more nozzles for emitting a fluid, or one or more electrodes.

10. The system of any of claims 1-9, wherein the arrangement units (20) are arrayed contiguously with one another along said longitudinal axis (X).

11. The system of any of claims 1-10, wherein every arrangement unit (20) contains exactly two groups (22a, 22b) of cleaning elements (18), the first of a first category (A), the second of a second category (B), in a same order for every arrangement unit, whereby the arrangement defines an alternating pattern of cleaning element categories.

12. The system of any of claims 1-11, wherein the arrangement of cleaning elements comprises at least 3 units, optionally at least 7, optionally at least 15, optionally at least 28, optionally at least 56 .

13. The system of any claims 1-12, wherein the system is for use as part of or the whole of a brushing mouthpiece device,

wherein the cleaning section comprises a mouthpiece portion for the mouthpiece device for at least partial receipt in the mouth during use, and wherein the substrate is comprised by the mouthpiece portion;
wherein the body of the mouthpiece portion defines an arcuate contour shape for approximately following a contour of at least a portion of a subject's dental arch;
wherein said longitudinal axis of the arrangement extends co-directionally with said arcuate contour, and preferably wherein the mouthpiece portion defines a tooth-receiving channel, the channel having a shape following said arcuate contour, to permit receipt of a row of teeth into the channel and wherein the arrangement of cleaning elements extends into the channel for engagement with teeth surfaces during use.

14. The system of any of claims 1-13, wherein the plurality of arrangement units includes units of at least four different total widths.

15. The system of any of claims 1-14,

wherein the set of at least two categories includes at least a first category and a second category, and wherein a length of the cleaning elements of the first category along a direction of their extension from the substrate is greater than a length of the cleaning elements of the second category along a direction of their extension from the substrate, and preferably wherein said length of the cleaning elements of the first category is between 6-12 mm, and preferably wherein said length of the cleaning elements of the second category is between 4 and 8 mm, and optionally wherein the cleaning elements of the first category extend from the substrate at a first angle, and the cleaning elements of the second category extend from the substrate at a different second angle, wherein the second angle is shallower than the first angle, and preferably wherein the second angle is between 40° and 80°, more preferably approximately 45°, and preferably wherein the first angle is between 70° and 90°, more preferably approximately 90°.

16. An oral cleaning device, comprising the system of any of claims 1-15.

17. The oral cleaning device of claim 16, wherein the oral cleaning device is a mouthpiece device, or the oral cleaning device is a powered toothbrush.

**Patentansprüche**

1. System, umfassend:

eine Reinigungssektion (10) für eine Mundreinigungsvorrichtung, umfassend ein Substrat (12) und eine Anordnung (16) von Reinigungselementen (18), die durch eine Oberfläche des Substrats getragen werden; wobei die Anordnung von Reinigungselementen aus einem Satz von mindestens zwei unterschiedlichen Kategorien (A, B) von Reinigungselementen gebildet ist, wobei die Reinigungselemente jeder Kategorie eine Höhe, Länge und/oder Winkelausdehnung im Verhältnis zu der Substratoberfläche aufweisen, die sich von jeder anderen Kategorie unterscheidet; wobei die Anordnung (16) von Reinigungselementen (18) aus einer Vielzahl von Anordnungseinheiten (20) besteht, die sequenziell in einer Reihe entlang einer Längsachse (X) angeordnet sind, wobei jede Einheit (20) eine Vielzahl von Gruppen (22) von Reinigungselementen einschließt, wobei jede Reinigungselementgruppe (22) eine Vielzahl von Reinigungselementen (18) nur einer der Kategorien (A, B) umfasst und jede Einheit (20) mindestens eine Gruppe jeder Kategorie von Reinigungselementen aufweist, wobei jede Reinigungselementgruppe (22) eine längliche Aufstandsfläche auf dem Substrat definiert, die eine längliche Längenabmessung aufweist, die senkrecht zur Längsachse (X) ist, und wobei die Reinigungselementgruppen innerhalb jeder Einheit sequenziell entlang der Längsachse (X) angeordnet sind; wobei jede Reinigungsanordnungseinheit (20) eine Gesamtlängsbreite (w) entlang der Längsachse (X) aufweist, wobei das System weiter einen Betätigungsmechanismus zum Antreiben einer periodischen Bewegung der Anordnung von Reinigungselementen hin und her entlang eines parallel zur Längsachse ausgerichteten Verfahrwegs umfasst und der Verfahrweg ein erstes und ein zweites Ende aufweist, wobei ein Abstand zwischen denselben eine Hublänge, $\Delta x$, entlang der Längsachse definiert; wobei die Vielzahl von Anordnungseinheiten und die Hublänge so konfiguriert sind, dass für jede Anordnungseinheit

$$\Delta x \geq 0{,}5 \; \Delta W\_a$$

wobei $\Delta W\_a$ ein kleinster Längsbreitenabschnitt einer Gesamtlängsbreite (w) der jeweiligen Einheit ist, die mindestens eine Gruppe von jedem der Sätze von Kategorien von Reinigungselementen überspannt.

2. System nach Anspruch 1, wobei die Vielzahl von Anordnungseinheiten (20) Anordnungseinheiten mit zueinander unterschiedlichen Gesamtbreiten (w) einschließt.

3. System nach Anspruch 1 oder 2, wobei jede der Anordnungseinheiten (20) und die Hublänge (Δx) so konfiguriert sind, dass

$$\Delta x \geq 0,5 \; \Delta W\_b$$

wobei ΔW_b die Gesamtlängsbreite der längs breitesten Einheit der Anordnung ist.

4. System nach einem der Ansprüche 1-3, wobei die Reinigungshublänge (Δ×) kleiner oder gleich 15 mm und größer oder gleich 1 mm ist.

5. System nach einem der Ansprüche 1-4, wobei jede Anordnungseinheit (20) eine gleiche Anzahl von Gruppen (22) von Reinigungselementen enthält und
wahlweise wobei die Gruppen von Reinigungselementen (22), die jede Anordnungseinheit (20) umfasst, einer gleichen geordneten Abfolge der Reinigungselementkategorien folgen.

6. System nach einem der Ansprüche 1-5, wobei die Gesamtlängsbreite (w) jeder Anordnungseinheit (20) gleich der genauen Breite ist, die von der jeweiligen Folge von Gruppen der Einheit überspannt wird.

7. System nach einem der Ansprüche 1-5, wobei mindestens eine Teilmenge der Vielzahl von Anordnungseinheiten (20) an einem Längsende vor oder nach der Folge von Gruppen einen reinigungselementfreien Raum (32) einschließt und wobei die gesamte Längsbreite jeder Einheit (20) die Breite ist, die sich über alle Gruppen (22) zuzüglich des reinigungselementfreien Raums (32) und wahlweise, wobei jede Anordnungseinheit den reinigungselementfreien Raum (32) einschließt.

8. System nach Anspruch 7, wobei jede Anordnungseinheit (20) aus einer zusammenhängenden Folge von Reinigungselementgruppen (22) besteht, die entlang der Längsachse (X) angeordnet sind, gefolgt von dem reinigungselementfreien Raum (32), und
wahlweise, wobei die Vielzahl von Reinigungsanordnungseinheiten (20) reinigungselementfreie Räume mit jeweils unterschiedlichen Längsbreiten (w) einschließt.

9. Reinigungsabschnitt nach einem der Ansprüche 7-8, der weiter eine Funktionskomponente zum Durchführen einer Mundpflegefunktion umfasst, die an einer Stelle innerhalb mindestens eines der von reinigungselementfreien Räume angebracht ist, und wobei die Funktionskomponente eines von Folgendem ist: einer Lichtquelle, einer Quelle eines Hochfrequenzfelds, einer elektrochemische Quelle, einer Ultraschallquelle, einer oder mehrerer Düsen zum Ausstoßen eines Fluids oder einer oder mehreren Elektroden.

10. System nach einem der Ansprüche 1-9, wobei die Anordnungseinheiten (20) miteinander zusammenhängend entlang der Längsachse (X) angeordnet sind.

11. System nach einem der Ansprüche 1-10, wobei jede Anordnungseinheit (20) genau zwei Gruppen (22a, 22b) von Reinigungselementen (18) enthält, die erste von einer ersten Kategorie (A), die zweite von einer zweiten Kategorie (B), in einer gleichen Reihenfolge für jede Anordnungseinheit, wobei die Anordnung ein alternierendes Muster von Reinigungselementkategorien definiert.

12. System nach einem der Ansprüche 1-11, wobei die Anordnung von Reinigungselementen mindestens 3 Einheiten, wahlweise mindestens 7, wahlweise mindestens 15, wahlweise mindestens 28, wahlweise mindestens 56 Einheiten umfasst.

13. System nach den Ansprüchen 1-12, wobei das System zur Verwendung als Teil oder als die Gesamtheit einer Bürstenmundstückvorrichtung dient,

wobei der Reinigungsabschnitt einen Mundstückabschnitt für die Mundstückvorrichtung zur mindestens teilweisen Aufnahme im Mund während der Verwendung umfasst und wobei das Substrat vom Mundstückabschnitt umfasst wird;
wobei der Körper des Mundstückabschnitts eine bogenförmige Umrissform definiert, um ungefähr einem Umriss mindestens eines Abschnitts des Zahnbogens eines Subjekts zu folgen;
wobei sich die Längsachse der Anordnung kodirektional mit dem bogenförmigen Umriss erstreckt, und

wobei der Mundstückabschnitt vorzugsweise einen Zahnaufnahmekanal definiert, wobei der Kanal eine Form aufweist, die dem bogenförmigen Umriss folgt, um die Aufnahme einer Reihe von Zähnen in den Kanal zu ermöglichen, und wobei sich die Anordnung von Reinigungselementen in den Kanal erstreckt, um während Verwendung mit den Zahnoberflächen in Eingriff zu kommen.

14. System nach einem der Ansprüche 1-13, wobei die Vielzahl von Anordnungseinheiten Einheiten mit mindestens vier unterschiedlichen Gesamtbreiten einschließt.

15. System eines der Ansprüche 1-14,

wobei der Satz aus mindestens zwei Kategorien mindestens eine erste Kategorie und eine zweite Kategorie einschließt und wobei eine Länge der Reinigungselemente der ersten Kategorie entlang einer Richtung ihrer Ausdehnung vom Substrat größer ist als eine Länge der Reinigungselemente der zweiten Kategorie entlang einer Richtung ihrer Ausdehnung vom Substrat, und wobei die Länge der Reinigungselemente der ersten Kategorie vorzugsweise zwischen 6-12 mm beträgt, und wobei die Länge der Reinigungselemente der zweiten Kategorie vorzugsweise zwischen 4 und 8 mm beträgt, und

wahlweise, wobei sich die Reinigungselemente der ersten Kategorie in einem ersten Winkel vom Substrat erstrecken und sich die Reinigungselemente der zweiten Kategorie in einem anderen zweiten Winkel vom Substrat erstrecken, wobei der zweite Winkel flacher ist als der erste Winkel und wobei der zweite Winkel vorzugsweise zwischen 40° und 80°, besonders bevorzugt ungefähr 45°, beträgt, und wobei der erste Winkel vorzugsweise zwischen 70° und 90°, besonders bevorzugt ungefähr 90°, beträgt.

16. Mundreinigungsvorrichtung, umfassend das System nach einem der Ansprüche 1-15.

17. Mundreinigungsvorrichtung nach Anspruch 16, wobei die Mundreinigungsvorrichtung eine Mundstückvorrichtung ist oder die Mundreinigungsvorrichtung eine elektrische Zahnbürste ist.

## Revendications

1. Système, comprenant :

une section de nettoyage (10) pour un dispositif de nettoyage buccal, comprenant un substrat (12) et un agencement (16) d'éléments de nettoyage (18) portés par une surface du substrat ;
dans lequel l'agencement est formé d'éléments de nettoyage provenant d'un ensemble d'au moins deux catégories différentes (A, B) d'éléments de nettoyage, les éléments de nettoyage de chaque catégorie présentant une hauteur, une longueur et/ou une extension angulaire par rapport à la surface du substrat différente(s) de toutes les autres catégories ;
dans lequel l'agencement (16) des éléments de nettoyage (18) est composé d'une pluralité d'unités d'agencement (20) disposées séquentiellement sur une rangée le long d'un axe longitudinal (X), chaque unité (20) incluant une pluralité de groupes (22) d'éléments de nettoyage, chaque groupe d'éléments de nettoyage (22) comprenant une pluralité d'éléments de nettoyage (18) d'une seule des catégories (A, B), et chaque unité (20) présentant au moins un groupe de chaque catégorie d'éléments de nettoyage,
dans lequel chaque groupe d'éléments de nettoyage (22) définit une empreinte allongée sur le substrat présentant une dimension de longueur allongée qui est perpendiculaire audit axe longitudinal (X), et dans lequel les groupes d'éléments de nettoyage au sein de chaque unité sont disposés séquentiellement le long dudit axe longitudinal (X) ;
dans lequel chaque agencement d'unité de nettoyage (20) présente une largeur longitudinale totale (w) le long de l'axe longitudinal (X),
dans lequel le système comprend en outre un mécanisme d'actionnement pour entraîner un mouvement régulier de l'agencement des éléments de nettoyage d'avant en arrière le long d'une trajectoire orientée parallèlement audit axe longitudinal, et la trajectoire présentant une première extrémité et une seconde extrémité, une distance entre elles définissant une longueur de course, $\Delta x$, le long de l'axe longitudinal ;
dans lequel la pluralité des unités d'agencement et la longueur de la course sont configurées de telle sorte que pour chaque unité d'agencement,

$$\Delta x \geq 0{,}5\ \Delta W\_a$$

où ΔW_a est une section de largeur longitudinale la plus petite d'une largeur longitudinale totale (w) de l'unité respective qui couvre au moins un groupe de chacune des catégories d'éléments de nettoyage.

2. Système selon la revendication 1, dans lequel la pluralité d'unités d'agencement (20) inclut des unités d'agencement présentant des largeurs totales (w) différentes les unes des autres.

3. Système selon la revendication 1 ou 2, dans lequel chacune des unités d'agencement (20) et la longueur de course (Δx) sont configurées de telle sorte que,

$$\Delta x \geq 0,5 \ \Delta W\_b$$

où ΔW_b est la largeur longitudinale totale de l'unité la plus large longitudinalement de l'agencement.

4. Système selon l'une quelconque des revendications 1-3, dans lequel la longueur de la course de nettoyage (Δx) est inférieure ou égale à 15 mm et supérieure ou égale à 1 mm.

5. Système selon l'une quelconque des revendications 1-4, dans lequel chaque unité d'agencement (20) contient un même nombre de groupes (22) d'éléments de nettoyage, et
éventuellement dans lequel les groupes d'éléments de nettoyage (22) compris par chaque unité d'agencement (20) suivent une même séquence ordonnée des catégories d'éléments de nettoyage.

6. Système selon l'une quelconque des revendications 1-5, dans lequel la largeur longitudinale totale (w) de chaque unité d'agencement (20) est égale à la largeur exacte couverte par la séquence respective de groupes de l'unité.

7. Système selon l'une quelconque des revendications 1-5, dans lequel au moins un sous-ensemble de la pluralité d'unités d'agencement (20) inclut un espace libre d'élément de nettoyage (32) à une extrémité longitudinale, avant ou après la séquence de groupes, et dans lequel la largeur longitudinale totale de chaque unité (20) est la largeur couvrant tous les groupes (22) plus l'espace libre d'élément de nettoyage (32), et éventuellement dans lequel chaque unité d'agencement inclut ledit espace libre d'éléments de nettoyage (32).

8. Système selon la revendication 7, dans lequel chaque unité d'agencement (20) est constituée d'une séquence contiguë de groupes d'éléments de nettoyage (22) disposés le long dudit axe longitudinal (X), suivie de l'espace libre des éléments de nettoyage (32), et
éventuellement, dans lequel la pluralité d'unités d'agencement de nettoyage (20) inclut des espaces libres d'éléments de nettoyage de largeurs longitudinales respectives différentes (w).

9. Système selon l'une quelconque des revendications 7-8, comprenant en outre un composant fonctionnel pour effectuer une fonction de soins bucco-dentaires monté à un emplacement au sein d'au moins l'un des espaces libres d'éléments de nettoyage, et éventuellement dans lequel le composant fonctionnel est l'un parmi : une source de lumière, une source d'un champ de radiofréquence, une source électrochimique, une source ultrasonore, une ou plusieurs buses pour émettre un fluide, ou une ou plusieurs électrodes.

10. Système selon l'une quelconque des revendications 1-9, dans lequel les unités d'agencement (20) sont disposées de manière contiguë les unes aux autres le long dudit axe longitudinal (X).

11. Système selon l'une quelconque des revendications 1-10, dans lequel chaque unité d'agencement (20) contient exactement deux groupes (22a, 22b) d'éléments de nettoyage (18), le premier d'une première catégorie (A), le second d'une seconde catégorie (B), dans le même ordre pour chaque unité d'agencement, selon lequel l'agencement définit un modèle alterné de catégories d'éléments de nettoyage.

12. Système selon l'une quelconque des revendications 1-11, dans lequel l'agencement des éléments de nettoyage comprend au moins 3 unités, optionnellement au moins 7, optionnellement au moins 15, optionnellement au moins 28, optionnellement au moins 56.

13. Système selon l'une quelconque des revendications 1-12, dans lequel le système est destiné à être utilisé comme partie ou dans la totalité d'un dispositif d'embout buccal de brossage,

dans lequel la section de nettoyage comprend une partie d'embout buccal pour le dispositif d'embout buccal pour une réception au moins partielle dans la bouche pendant l'utilisation, et dans lequel le substrat est compris dans la partie d'embout buccal ;

dans lequel le corps de la partie d'embout buccal définit une forme de contour arqué pour suivre approximativement un contour d'au moins une partie de l'arcade dentaire d'un sujet ;

dans lequel ledit axe longitudinal de l'agencement s'étend de manière codirectionnelle avec ledit contour arqué, et

de préférence dans lequel la partie d'embout buccal définit un canal de réception de dent, le canal présentant une forme suivant ledit contour arqué, pour permettre la réception d'une rangée de dents dans le canal et dans lequel l'agencement d'éléments de nettoyage s'étend dans le canal pour se mettre en prise avec les surfaces des dents pendant l'utilisation.

14. Système selon l'une quelconque des revendications 1-13, dans lequel la pluralité d'unités d'agencement inclut des unités d'au moins quatre largeurs totales différentes.

15. Système de l'une quelconque des revendications 1-14,

dans lequel l'ensemble d'au moins deux catégories inclut au moins une première catégorie et une seconde catégorie, et dans lequel la longueur des éléments de nettoyage de la première catégorie le long d'une direction de leur extension à partir du substrat est supérieure à la longueur des éléments de nettoyage de la seconde catégorie le long d'une direction de leur extension à partir du substrat, et de préférence dans lequel ladite longueur des éléments de nettoyage de la première catégorie est comprise entre 6 et 12 mm, et de préférence dans lequel ladite longueur des éléments de nettoyage de la seconde catégorie est comprise entre 4 et 8 mm, et éventuellement dans lequel les éléments de nettoyage de la première catégorie s'étendent à partir du substrat selon un premier angle, et les éléments de nettoyage de la seconde catégorie s'étendent à partir du substrat selon un second angle différent, dans lequel le second angle est moins profond que le premier angle, et de préférence dans lequel le second angle est compris entre 40° et 80°, plus préférentiellement est d'environ 45°, et de préférence dans lequel le premier angle est compris entre 70° et 90°, plus préférablement est d'environ 90°.

16. Dispositif de nettoyage buccal comprenant le système selon l'une quelconque des revendications 1-15.

17. Dispositif de nettoyage buccal selon la revendication 16, dans lequel le dispositif de nettoyage buccal est un embout buccal, ou le dispositif de nettoyage buccal est une brosse à dents électrique.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

**EP 4 551 154 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0208401 A2